# FASCICULE DE BREVET EUROPEEN

(11) **EP 1 145 842 B1**
(45) Date de publication et mention de la délivrance du brevet: **29.04.2009**
(21) Numéro de dépôt: 01400958.3
(22) Date de dépôt: 13.04.2001
(51) Int. Cl.: B32B 17/10, C03C 27/12, H05B 3/86, H05B 3/56

(54) **Vitre feuilletée**
Verbundglasscheibe
Laminated glazing

(30) Priorité: 13.04.2000 DE 10018276
(43) Date de publication de la demande: 17.10.2001
(73) Titulaire: SAINT-GOBAIN GLASS FRANCE, 92400 Courbevoie (FR)
(72) Inventeur: Gillner, Manfred, 52078 Aachen (DE); Heermann, Eberhard, 58119 Hagen (DE)
(74) Mandataire: Muller, René

(56) Documents cités:
- EP-A- 0 643 548
- FR-A- 1 061 216
- FR-A- 1 547 743
- US-A- 3 492 463
- US-A- 3 793 716
- US-A- 4 346 277

## Description

L'invention se rapporte à une vitre feuilletée, en particulier une vitre chauffante ou une vitre d'antenne, ayant les caractéristiques du préambule de la revendication 1. On désigne ici par vitres feuilletées des vitres transparentes à plusieurs couches composées d'au moins une vitre fixe en verre ou en matière synthétique et d'une couche adhésive thermoplastique adhérant à celle-ci.

Ces caractéristiques sont par exemple connues par EP 0 490 723 A1 et DE 195 41 009 A1.

On connaît également par le document DE-U1-88 00 823 une vitre feuilletée de ce type avec une bobine de grande étendue en fils d'argent ou de cuivre. Les fils de cuivre doivent au besoin être étamés ou argentés. L'étamage final de fils nus est une opération préparatoire courante, lorsque les extrémités des fils doivent être reliées électriquement et mécaniquement à d'autres pièces par brasage tendre.

Dans les vitres feuilletées constituant des vitres chauffantes, on utilise en règle générale comme fils de chauffage de fins fils de tungstène, qui sont déposés sous forme droite ou ondulée sur la couche adhésive thermoplastique. Pour garantir un bon contact entre les éléments de raccordement, respectivement les barrettes collectrices de courant, et les fils de chauffage, on utilise comme barrettes collectrices de courant chaque fois deux bandes de feuille de cuivre, qui sont étamées au moins sur une face. Les deux bandes de feuille métallique enfermant entre elles les extrémités des fils de chauffage et étamées sur cette face sont chauffées de manière adéquate, par exemple à l'aide d'un fer à souder, de telle façon que les deux couches d'étain fusionnent l'une avec l'autre et que les fils de tungstène soient noyés entre les deux bandes de feuille de cuivre. L'apport de chaleur devrait rester aussi faible que possible à cet endroit, afin que la feuille thermoplastique ne soit pas endommagée de façon involontaire.

Il est cependant connu que des fils de tungstène ne forment pas un assemblage brasé, ou ne forment qu'un assemblage brasé imparfait, avec des alliages de brasage à l'étain. Il peut dès lors arriver, dans les vitres feuilletées connues, qu'après le brasage des deux bandes de feuille métallique, les fils de chauffage ne soient pas en contact électrique parfait avec les feuilles de bande métallique.

Par le document DE-GM 94 11 516, on connaît une vitre feuilletée chauffante en verre, dans laquelle des modifications aux fils de chauffage induites par une humidité diffusante sont exclues ou au moins nettement réduites, du fait qu'une couche d'une colle électriquement conductrice est disposée entre les deux bandes de feuille métallique. Au lieu de la couche d'étain de brasage, on trouve donc dans cette vitre feuilletée une couche de colle électriquement conductrice, qui en même temps adhère aux fils sur toute la surface cylindrique des fils dans la région située entre les deux bandes de feuille métallique et établit la liaison électriquement conductrice entre les bandes de feuille métallique et les fils.

Le document DE-GM 298 03 544 divulgue une vitre feuilletée en verre à chauffage électrique, dans laquelle chacun des fils de chauffage montés en parallèle forme une boucle sinueuse avec un nombre impair de portions de boucle s'étendant sur la largeur de la vitre. Du fait de la disposition sinueuse des fils de chauffage et de leur grande longueur effective, on peut utiliser des fils en des matières présentant une résistance spécifique inférieure à celle du tungstène, par exemple le cuivre ou un alliage de cuivre. A la place d'une barrette collectrice du courant, les extrémités homopolaires des fils de chauffage sont chaque fois rassemblées en un endroit et raccordées à un élément de raccordement électrique. La matière des fils de chauffage garantit un bon assemblage brasé avec les éléments de raccordement électrique. L'inconvénient d'une telle vitre feuilletée pourvue de fils électriquement conducteurs est la nécessité d'utiliser un dispositif analogue à un traceur pour la pose des fils, lequel travaille relativement lentement. Le dispositif de pose de fils connu par le document DE 195 41 427 A1, avec lequel plusieurs feuilles intercalaires thermoplastiques disposées sur un tambour sont simultanément et à grande vitesse pourvues des fils, ne peut pas être utilisé à cause de la pose des fils en boucles sinueuses et en raison de la résistance mécanique insuffisante du fil de cuivre.

Par les documents DE 42 35 063 A1 et DE 43 32 320 Cl, on connaît des vitres feuilletées en verre dans lesquelles des fils métalliques noyés dans la couche adhésive thermoplastique sont utilisés comme antenne pour la réception radio. En guise d'éléments de raccordement pour les fils d'antenne, qui peuvent aussi être constitués de tungstène, on utilise en l'occurrence de préférence des câbles plats en cuivre. Lors de la mise en contact des fils d'antenne avec les éléments de raccordement, il apparaît des difficultés analogues à celles des vitres chauffantes.

Le document DE 44 16 165 A1 divulgue un dispositif absorbant les ondes radar pour les vitrages de fenêtres ou des bardages de façade en double couche avec une couche réfléchissant partiellement le rayonnement électromagnétique disposée dans la région de la couche extérieure et une autre couche réfléchissante disposée dans la région de la couche intérieure à une distance d'environ un quart de la longueur d'onde de service. Celle-ci se compose de portions de conducteurs électriques filiformes, disposés parallèlement les uns aux autres, qui sont disposés en un motif géométrique ordonné. Les fils de tungstène se sont révélés une matière particulièrement appropriée pour les portions de conducteurs, parce qu'ils sont à peine perceptibles visuellement dans un vitrage de fenêtre en raison de leur faible épaisseur. Pour des vitrages de fenêtres, il est considéré comme particulièrement avantageux de poser les portions de conducteurs sur une feuille de matière synthétique, par exemple en butyral de polyvinyle. Etant donné que les portions de conducteurs ne sont pas raccordées à des éléments de raccordement, le problème de la mise en contact électrique ne se pose pas dans ce cas.

Par le document DE-A1-197 03 390, il est connu de munir des fils en fer ou en acier au carbone, qui sont prévus pour être transformés en bandes de clôture pour pâturages, d'un revêtement conducteur et résistant à la corrosion avec un métal conducteur comme le cuivre, le nickel, le zinc, le chrome, l'étain ou l'étain/plomb. Certes, ces fils doivent sans aucun doute présenter une haute résistance à la traction, cependant le problème d'une mise en contact par brasage ainsi que l'incorporation (visuellement discrète) dans une vitre feuilletée ne se pose pas.

L'invention a pour objet d'éviter les inconvénients précités et de proposer des vitres feuilletées du type mentionné dans l'introduction avec un matériau de fil amélioré en ce qui concerne la conductibilité de surface et éventuellement l'aptitude au brasage.

Conformément à l'invention, cet objectif est atteint par les caractéristiques de la revendication 1. Les caractéristiques des revendications secondaires indiquent des variantes avantageuses de cet objet.

Dans le cadre de l'invention, la notion de barrette collectrice de courant ne vise pas seulement un conducteur électrique en forme de bande raccordé à plusieurs fils, mais aussi chaque élément de raccordement électriquement conducteur, de quelque forme géométrique que ce soit, raccordé à au moins un fil déposé sur la couche adhésive thermoplastique.

Pour la vitre feuilletée conforme à l'invention, on utilise donc des fils qui ne sont pas composés d'une matière homogène, mais qui sont construits en plusieurs couches. De cette manière, les différentes propriétés des matières individuelles peuvent être mises à profit de façon adéquate. Une exigence imposée à un tel fil est entre autres une résistance mécanique suffisante, en particulier une résistance à la traction, afin que les fils, qui n'ont en règle générale qu'une épaisseur comprise entre 10 µm et 70 µm, puissent être manipulés automatiquement sans difficultés et puissent être déposés sous forme droite ou ondulée, sans formation de boucles, sur la couche adhésive thermoplastique. Un diamètre plus grand n'est pas envisagé pour l'application traitée ici, sinon une vision impeccable à travers la vitre ne serait plus garantie.

Une deuxième exigence consiste à régler la résistance électrique nécessaire pour l'application considérée, pour un diamètre prédéterminé. Lors de la fabrication d'une vitre feuilletée chauffante, il faut par exemple adapter à la puissance de chauffage requise, la résistance des fils, qui s'étendent entre deux barrettes collectrices de courant situées l'une en face de l'autre à une distance d'environ 0,5 m à 2 m. Et enfin, il faut assurer une bonne liaison électrique et mécanique des fils, en particulier par brasage tendre, avec les barrettes collectrices de courant.

Le fil à plusieurs couches, noyé dans la couche adhésive sur une surface d'une vitre fixe, se compose d'un métal à haute résistance mécanique, de préférence d'un acier allié, qui est assemblé à un métal meilleur conducteur et aisément brasable, de préférence du cuivre.

La section transversale d'un tel fil comporte donc au moins deux zones avec des matières ayant des propriétés différentes. Une telle combinaison de métaux électriquement conducteurs représente un montage parallèle de résistances électriques. Les résistances individuelles dépendent des dimensions géométriques et des résistances spécifiques. En modifiant le rapport entre les aires des sections transversales du métal mécaniquement résistant et du métal meilleur conducteur, la résistance électrique du fil par unité de longueur peut être adaptée à chaque cas d'application. Comme matériaux pour la partie mécaniquement résistante du fil, on peut aussi envisager, outre l'acier au chrome-nickel déjà cité, par exemple d'autres alliages d'acier et d'aciers alliés. Hormis le cuivre, on peut aussi utiliser d'autres métaux brasables et bons conducteurs, comme par exemple l'argent, l'or, l'aluminium ou des alliages de ces métaux, pour autant seulement que l'on soit sûr de pouvoir réaliser un assemblage durable et de bonne qualité entre les deux matières du fil.

Le fil peut par exemple être une bande stratifiée composée de deux ou plus de deux couches de matières électriquement conductrices assemblées l'une à l'autre. Il s'est cependant avéré particulièrement avantageux de construire le fil à partir d'une âme de la matière à haute résistance mécanique et d'une gaine entourant celle-ci, constituée du métal meilleur conducteur. Cette forme de fil peut avoir une section transversale ronde, elliptique ou polygonale.

Le cuivrage se fait avec un diamètre de fil de 0,2 à 0,4 mm. Ces fils sont ensuite étirés finement à leurs dimensions définitives. On cherche à obtenir une valeur de résistance de 150 Ω/m au maximum pour un diamètre aussi faible que possible du fil revêtu.

Un fil en acier allié peut en principe être particulièrement bien fabriqué par étirage fin, parce que la matière affiche un bon comportement de ductilité. Au cours des essais, un acier inoxydable austénitique, portant le numéro de matériau 1.4306 (désignation normalisée internationale AISI 304 L) s'est révélé bien adapté. Les fins diamètres obtenus avec celui-ci ne pouvaient pas être fabriqués avec des matériaux de NiCr.

En outre, le cuivre adhère particulièrement bien après un dépôt galvanique sur un matériau de base en acier allié. Pour des combinaisons de matériaux déterminées, il peut se produire, lors de l'étirage fin de fils (c'est-à-dire lors de la réduction du diamètre du fil à la dimension extrêmement faible désirée ici), des effets de tuyau, par lesquels la couche de matière externe de la matière hautement conductrice se détache et entoure l'âme métallique du fil par tronçons à la manière d'un tuyau flexible, sans y adhérer. Avec une bonne adhérence entre l'acier allié et le placage de cuivre, ces problèmes n'apparaissent au contraire pas, même lors de l'étirage fin.

La vitre feuilletée conforme à l'invention, avec des fils à plusieurs couches électriquement conducteurs, peut être réalisée non seulement comme vitre à chauffage électrique, mais aussi par exemple comme vitre d'antenne. Dans ce cas, il est particulièrement avantageux que la conductibilité de surface d'un fil, qui se compose d'une âme métallique et d'une gaine en un métal meilleur conducteur, soit supérieure à celle d'un fil homogène. On contrarie ainsi l'effet de peau, par lequel des courants à haute fréquence circulent principalement à la surface de conducteurs, de telle façon que l'on puisse fabriquer des antennes de vitres d'une qualité particulièrement élevée. Moyennant une configuration correspondante, la vitre feuilletée conforme à l'invention peut également être utilisée pour d'autres applications, par exemple comme fenêtre de protection contre un rayonnement électro-magnétique.

L'emploi d'un bon métal de brasage ouvre la possibilité de réaliser un brasage tendre des fils avec les barrettes collectrices de courant. Contrairement à l'état de la technique, selon lequel des fils de tungstène sont en règle générale simplement noyés entre deux feuilles de cuivre étamées, on peut réaliser avec la vitre feuilletée conforme à l'invention un véritable brasage, lorsque l'on choisit des barrettes collectrices de courant appropriées. Il n'est pas non plus nécessaire que les barrettes collectrices de courant soient composées de deux feuilles de métal, entre lesquelles les portions d'extrémité des fils sont noyées, la barrette collectrice de courant peut au contraire se composer d'une bande, respectivement d'une feuille, à une seule couche. Dans une autre variante avantageuse de la vitre feuilletée, les fils sont pourvus d'une laque mate. On peut ainsi réduire efficacement, ou même supprimer complètement, des réflexions gênantes qui partent d'une surface métallique éventuellement brillante du fil. La couche de laque est traversée sans précautions particulières lors de l'opération de brasage et n'empêche pas le brasage régulier des fils et des barrettes collectrices.

A cet égard, le cuivre présente à nouveau l'avantage, par rapport à d'autres matières de revêtement hautement conductrices (comme par exemple l'argent), qu'il est lui-même relativement sombre et discret. Sur le cuivre, il ne faut appliquer qu'une couche de laque très mince pour pouvoir incorporer le fil de façon visuellement discrète dans la vitre feuilletée. Plus la couche de laque peut être mince, plus est globalement mince également le fil laqué terminé, parce que la couche de laque augmente naturellement très peu le diamètre total de celui-ci.

D'autres détails et avantages de l'objet de l'invention apparaîtront, sans aucune intention de limitation, par les dessins d'un exemple de réalisation portant sur une vitre feuilletée à chauffage électrique et par sa description détaillée qui suit.

Dans une représentation simplifiée, la
- Fig. 1: montre une vitre feuilletée conforme à l'invention représentée en perspective; la
- Fig. 2: est la représentation agrandie d'un détail en coupe suivant la ligne II-II; la
- Fig. 3: illustre une forme de réalisation d'un fil de chauffage, représentée en coupe agrandie; et la
- Fig. 4: illustre une autre forme de réalisation d'un fil de chauffage, représentée en coupe agrandie.

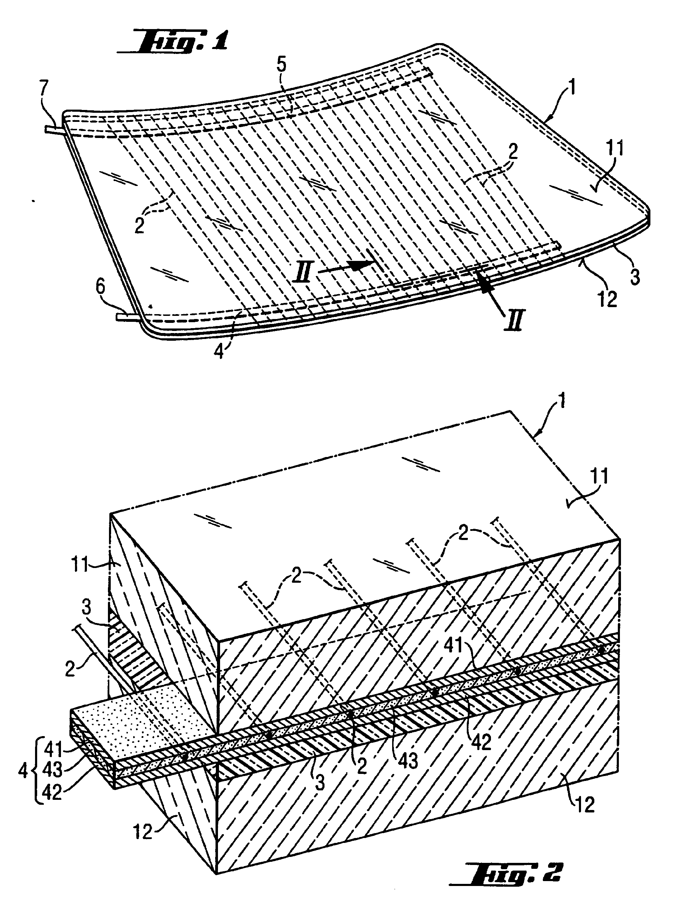

Suivant la Figure 1, la vitre feuilletée 1, qui dans le cas représenté est un pare-brise pour véhicules automobiles, présente des fils de chauffage 2 disposés parallèlement les uns aux autres, qui s'étendent entre l'arête supérieure et l'arête inférieure de la vitre. Suivant une méthode connue, les fils de chauffage 2 ont été posés avant la fabrication de la vitre composite sur la couche adhésive thermoplastique 3 en butyral de polyvinyle (PVB), qui est disposée entre les deux vitres individuelles 11 et 12 en verre de silice. Les fils de chauffage individuels 2 présentent un écartement mutuel de 2 mm à 15 mm par exemple.

Les fils de chauffage 2 sont raccordés en parallèle à deux barrettes collectrices de courant 4 et 5, qui sont disposées à faible distance du bord inférieur, respectivement supérieur, de la vitre feuilletée 1. Pour le raccordement des barrettes collectrices de courant 4 et 5 au réseau électrique de bord, on se sert de leurs portions d'extrémité 6 et 7 menées latéralement hors de la vitre feuilletée 1.

La structure des barrettes collectrices de courant 4 et 5 y compris leur raccordement aux fils de chauffage 2 ressort de la Figure 2. La barrette collectrice de courant 4 comprend une bande de feuille de cuivre 41 située au-dessus des fils de chauffage 2 et une bande de feuille de cuivre 42 située en dessous des fils de chauffage 2, entre lesquelles est disposée une couche de brasure tendre 43 (brasage à l'étain). La brasure tendre 43 est déjà présente, avant l'opération de brasage, sur une ou sur les deux bandes de feuille de cuivre à titre de pré-étamage. On supprime ainsi l'apport de brasure pendant le brasage tendre. L'épaisseur de la couche de brasure tendre 43 correspond environ au diamètre des fils de chauffage 2, mais peut aussi être moins grande. Dans ce cas, les fils de chauffage déforment les bandes de feuille de cuivre pendant l'opération de brasage, de sorte que celles-ci ne forment pas de renflements aux emplacements des fils. Ceux-ci sont compensés lors de l'assemblage par la matière fondue de la couche adhésive.

En règle générale, les barrettes collectrices de courant sont masquées, dans une ou dans les deux sens de vision, par un cadre décoratif en couleur céramique à cuire. Ce cadre décoratif peut être appliqué sur une ou sur les deux vitres et être disposé aussi bien à l'intérieur du composite que sur une face principale extérieure des vitres. Par souci de simplicité, ces cadres décoratifs ne sont pas représentés ici.

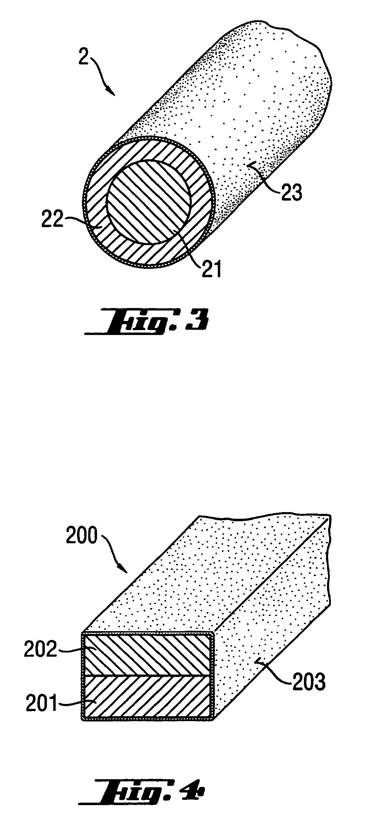

La Figure 3 montre une coupe transversale agrandie à travers un fil de chauffage 2 ayant un diamètre global de 30 µm. Le fil de chauffage 2 se compose d'une âme 21 d'un diamètre de 20 µm en acier au chrome-nickel, qui est entourée par une gaine de cuivre 22 ayant une épaisseur radiale de 5 µm. La surface latérale du fil de chauffage 2 est pourvue d'une couche de laque noire mate 23, pour empêcher les réflexions métalliques dans la vitre feuilletée. Celle-ci ne compromet pas le brasage des fils de chauffage.

Dans la Figure 4 est représentée une autre forme de réalisation, en forme de bande, d'un fil de chauffage 200, dans lequel une bande 201 large de 30 µm et épaisse de 10 µm en acier au chrome-nickel forme une zone à haute résistance mécanique, qui est couverte par et assemblée à une bande rectangulaire meilleure conductrice en cuivre 202 de mêmes dimensions. Dans cette forme de réalisation également, une couche de laque anti-réfléchissante 203 recouvre toute la surface du fil de chauffage 200. Lorsque l'on utilise un tel fil de chauffage stratifié en forme de bande en liaison avec une seule bande de feuille de cuivre étamée, il convient bien entendu de veiller, lors du brasage, à ce que la bande de cuivre aisément brasable 202 soit mise en contact avec la brasure à l'étain de la bande de feuille de cuivre.

La fabrication de la vitre feuilletée représentée dans les dessins se passe de la manière suivante: les deux vitres individuelles 11 et 12 sont découpées de la façon habituelle et cintrées à la forme désirée. Indépendamment de celles-ci, on prépare la couche adhésive thermoplastique 3 avec les barrettes collectrices 4 et 5 et les fils de chauffage 2. A cet effet, on dépose d'abord les bandes de feuille de cuivre inférieures 42 sur une feuille de butyral de polyvinyle de 0,76 mm d'épaisseur aux endroits prévus pour la disposition des barrettes collectrices de courant. A cette fin, on utilise des bandes de feuille de cuivre, qui sont pré-étamées sur leur face librement accessible. Si nécessaire, les bandes de feuille de cuivre déposées peuvent être pressées avec un outil approprié ou être fixées d'une autre façon, par exemple avec une colle.

Ensuite, les fils de chauffage 2 sont déposés sur la feuille de butyral de polyvinyle et fixés à la surface de la feuille en utilisant la chaleur et la pression. La pose des fils de chauffage 2 peut se faire par exemple avec un dispositif, qui est décrit dans le document DE 195 41 427 A1. Les fils de chauffage 2 sont menés jusqu'au-dessus des bandes de feuille de cuivre pré-étamées 42. Dès que tous les fils de chauffage sont déposés sur la feuille de PVB, on dépose les bandes de feuille de cuivre supérieures 43 sur les bandes de feuille de cuivre 42 adhérant à la feuille de PVB. Ainsi, les fils de chauffage 2 sont enfermés entre les deux bandes de feuille de cuivre 42 et 43. Le brasage peut à présent être effectué par simple chauffage de la bande de feuille de cuivre 43 se trouvant au-dessus, par exemple avec un fer à souder. Après la coupe des portions d'extrémité des fils de chauffage dépassant éventuellement hors du champ de chauffage enclavé entre les barrettes collectrices de courant, la couche adhésive thermoplastique est préparée pour le traitement ultérieur.

La couche adhésive ainsi préparée est réunie aux deux vitres individuelles 11 et 12 et l'air est éliminé de l'ensemble stratifié de façon connue par un traitement sous dépression. L'ensemble stratifié est alors définitivement assemblé dans un autoclave à une température d'environ 140°C et sous une pression d'environ 12 bar.

En variante par rapport à l'exemple de réalisation, la barrette collectrice de courant peut aussi ne se composer que d'une seule couche de feuille ou d'un seul toron de fil en raison de la bonne aptitude au brasage des fils à plusieurs couches utilisés. Dans l'exemple de réalisation, la bande de feuille de cuivre supérieure pourrait alors être supprimée et seule la bande de feuille de cuivre inférieure déjà fixée sur la couche adhésive pourrait, après la pose des fils, être brasée aux extrémités de ceux-ci, dans le cadre d'une fabrication par ailleurs identique.

La vitre feuilletée conforme à l'invention n'est en aucune manière limitée à une vitre feuilletée en verre du type décrit dans l'exemple de réalisation. Au contraire, on peut également imaginer des réalisations avec une seule vitre en verre et une vitre en matière synthétique ou avec deux vitres en matière synthétique.

## Revendications

1. Vitre feuilletée, en particulier vitre chauffante ou vitre d'antenne, avec des fils électriquement conducteurs noyés dans une couche adhésive thermoplastique, qui sont mis en contact électrique en particulier avec au moins un élément de raccordement, **caractérisée en ce que** les fils (2, 200) se composent d'au moins deux couches de matières conductrices (21, 22, 201, 202), dont l'une se compose d'un métal à haute résistance mécanique (21, 201) composé d'un acier ou d'un acier allié, et l'autre se compose d'un métal brasable (22, 202), en cuivre, argent, or, aluminium ou un alliage de ces métaux, présentant une conductibilité électrique plus élevée que celle du métal à haute résistance mécanique.

2. Vitre feuilletée suivant la revendication 1, **caractérisée en ce que** les fils sont mis en contact le long d'au moins une arête de la vitre avec une barrette collectrice de courant orientée transversalement par rapport aux fils.

3. Vitre feuilletée suivant la revendication 1 ou 2, **caractérisée en ce que** les fils électriquement conducteurs (2) comportent une âme du métal à haute résistance mécanique (21), qui est entouré par le métal présentant une conductibilité électrique plus élevée et brasable (22).

4. Vitre feuilletée suivant la revendication 2 ou 3, **caractérisée en ce que** l'on utilise comme acier ou acier allié, un acier au chrome-nickel.

5. Vitre feuilletée suivant la revendication 3 ou 4, **caractérisée en ce que** les fils électriquement conducteurs (2) se composent d'une âme (21) avec un diamètre compris entre 5 µm et 50 µm, qui est entourée par une gaine (22) d'une épaisseur de 1 µm à 25 µm.

6. Vitre feuilletée suivant l'une quelconque des revendications précédentes, **caractérisée en ce que** les fils électriquement conducteurs (2, 200) sont revêtus d'une couche de laque anti-réfléchissante (23, 203).

7. Vitre feuilletée suivant l'une quelconque des revendications précédentes, **caractérisée en ce que** les fils électriquement conducteurs (2, 200) sont brasés à une barrette collectrice de courant.

8. Vitre feuilletée suivant l'une quelconque des revendications précédentes, **caractérisée en ce que** la barrette collectrice de courant (4, 5) se compose de deux bandes de feuille de métal (41, 42), qui enferment entre elles les extrémités des fils électriquement conducteurs (2, 200).

9. Vitre feuilletée suivant la revendication 8, **caractérisée en ce que** les bandes de feuille de métal (41, 42) sont des bandes de feuille de cuivre étamées.

10. Vitre feuilletée suivant la revendication 5, **caractérisée en ce que** l'âme (21) est en acier allié austénitique et la gaine (22) est en cuivre.

## Claims

1. Laminated pane, in particular heating or antenna pane, having electrically conductive wires which are embedded in a thermoplastic adhesion layer and are in electrical contact in particular with at least one connection element, **characterized in that** the wires (2, 200) comprise at least two conductive material layers (21, 22, 201, 202), one of which is composed of a metal (21, 201) which can withstand high mechanical loads that is composed of a steel or an alloyed steel and the other of which is composed of a solderable metal (22, 202), in copper, silver, gold, aluminium or an alloy of these metals and of higher electrical conductivity than that of the metal which can withstand high mechanical loads.

2. Laminated pane according to Claim 1, **characterized in that** the wires are in contact with a busbar, which runs transversely with respect to the wires, along at least one edge of the pane.

3. Laminated pane according to Claim 1 or 2, **characterized in that** the electrically conductive wires (2) have a core made from the metal (21) which is able to withstand high mechanical loads, and this core is sheathed by the solderable metal of higher electrical conductivity (22).

4. Laminated pane according to Claim 2 or 3, **characterized in that** a chromium/nickel steel is used as steel or alloyed steel.

5. Laminated pane according to Claim 3 or 4, **characterized in that** the electrically conductive wires (2) comprise a core (21) with a diameter of between 5 µm and 50 µm, which is surrounded by a 1 µm to 25 µm thick sheath (22).

6. Laminated pane according to one of the preceding claims, **characterized in that** the electrically conductive wires (2, 200) are coated with an anti-glare lacquer (23, 203).

7. Laminated pane according to one of the preceding claims, **characterized in that** the electrically conductive wires (2, 200) are soldered to a busbar.

8. Laminated pane according to one of the preceding claims, **characterized in that** the busbar (4, 5) consists of two metal foil strips (41, 42), which enclose the ends of the electrically conductive wires (2, 200) between them.

9. Laminated pane according to Claim 8, **characterized in that** the metal foil strips (41, 42) are tin-coated copper foil strips.

10. Laminated pane according to 5, **characterized in that** the core (21) is in austenitic alloyed steel and the sheath (22) is in copper.

## Patentansprüche

1. Verbundglasscheibe, insbesondere Heizscheibe oder Antennenscheibe, mit elektrisch leitenden Drähten, die in eine thermoplastische Haftschicht eingebettet und insbesondere mit wenigstens einem Anschlusselement in elektrischen Kontakt gebracht sind, **dadurch gekennzeichnet, dass** die Drähte (2, 200) aus wenigstens zwei Schichten aus leitenden Materialien (21, 22, 201, 202) bestehen, von denen die eine aus einem Metall mit hoher mechanischer Festigkeit (21, 201), das von einem Stahl oder einem legierten Stahl gebildet ist, und die andere aus einem lötbaren Metall (22, 202) aus Kupfer, Silber, Gold, Aluminium oder einer Legierung dieser Metalle besteht, das eine höhere elektrische Leitfähigkeit als das Metall mit hoher mechanischer Festigkeit aufweist.

2. Verbundglasscheibe nach Anspruch 1, **dadurch gekennzeichnet, dass** die Drähte entlang wenigstens einer Kante der Glasscheibe mit einer Stromsammelschiene, die quer zu den Drähten ausgerichtet ist, in Kontakt gebracht sind.

3. Verbundglasscheibe nach Anspruch 1 oder 2, **dadurch gekennzeichnet, dass** die elektrisch leitenden Drähte (2) einen Kern aus dem Metall mit hoher mechanischer Festigkeit (21) aufweisen, der von dem lötbaren Metall (22) mit höherer elektrischer Leitfähigkeit umgeben ist.

4. Verbundglasscheibe nach Anspruch 2 oder 3, **dadurch gekennzeichnet, dass** als Stahl oder legierter Stahl ein Chrom-Nickel-Stahl verwendet wird.

5. Verbundglasscheibe nach Anspruch 3 oder 4, **dadurch gekennzeichnet, dass** die elektrisch leitenden Drähte (2) aus einem Kern (21) mit einem Durchmesser zwischen 5 µm und 50 µm bestehen, der von einem Mantel (22) mit einer Dicke zwischen 1 µm und 25 µm umgeben ist.

6. Verbundglasscheibe nach einem der vorhergehenden Ansprüche, **dadurch gekennzeichnet, dass** die elektrisch leitenden Drähte (2, 200) mit einer Antireflexlack-Schicht (23, 203) überzogen sind.

7. Verbundglasscheibe nach einem der vorhergehenden Ansprüche, **dadurch gekennzeichnet, dass** die elektrisch leitenden Drähte (2, 200) an eine Stromsammelschiene gelötet sind.

8. Verbundglasscheibe nach einem der vorhergehenden Ansprüche, **dadurch gekennzeichnet, dass** die Stromsammelschiene (4, 5) aus zwei Metallfolienstreifen (41, 42) besteht, welche die Enden der elektrisch leitenden Drähte (2, 200) zwischen sich einschließen.

9. Verbundglasscheibe nach Anspruch 8, **dadurch gekennzeichnet, dass** die Metallfolienstreifen (41, 42) verzinnte Küpferfolienstreifen sind.

10. Verbundglasscheibe nach Anspruch 5, **dadurch gekennzeichnet, dass** der Kern (21) aus legiertem Austenitstahl und der Mantel (22) aus Kupfer besteht.
